# EUROPEAN PATENT APPLICATION

(11) **EP 4 748 864 A1**
(43) Date of publication of application: **27.05.2026**
(21) Application number: 24868360.9
(22) Date of filing: 20.09.2024
(51) Int. Cl.: C08F 2/50, C09K 3/00

(54) **POLYMERIZATION INITIATOR OR PHOTOSENSITIZER, POLYMERIZATION INITIATION COMPOSITION, AND METHOD FOR PRODUCING RESIN**

(30) Priority: 22.09.2023 JP 2023157443
(71) Applicant: Miyoshi Oil & Fat Co., Ltd., Tokyo 124-0006 (JP)
(72) Inventor: TAKEKOSHI, Kazuma, Tokyo 124-0006 (JP); KANEKO, Nobuhiro, Tokyo 130-0012 (JP); KANEKO, Kotaro, Tokyo 124-0006 (JP); TERADA, Kazuhiro, Iwakura-shi, Aichi 482-8511 (JP); KAWAI, Koji, Tokyo 130-0012 (JP)
(74) Representative: Angerhausen, Christoph
(86) International application number: PCT/JP2024/033667
(87) International publication number: WO 2025/063284

(57) **Abstract**

Provided is a polymerization initiator or a photosensitizer that allows photopolymerization to be efficiently proceeded with light having a wavelength of 365 nm and is also excellent in heat resistance, and also provided are a polymerization initiator composition and a method for producing a resin. The polymerization initiator or photosensitizer includes a component (A) which is a benzophenone derivative having two or more sulfide groups each bonded to an aromatic hydrocarbon group, the aromatic hydrocarbon group optionally having a substituent.

## Description

### Technical Field

The present invention relates to a polymerization initiator or a photosensitizer, a polymerization initiator composition, and a method for producing a resin.

### Background Art

Resins, particularly thermoplastic resins, are produced by polymerizing monomers with a polymerization initiator. Among polymerization initiators, photopolymerization initiators that initiate a polymerization reaction upon being irradiated with ultraviolet or visible light are known, and various compounds such as benzophenone-based compounds and acylphosphine oxide-based compounds have been used.

Due to the recent trend toward energy saving in light sources used for photopolymerization, the use of LEDs as the light sources has increased, and there has been a demand for compounds that absorb ultraviolet radiation suitable for LEDs (e.g., light having a wavelength of 365 nm) and efficiently initiate a photopolymerization reaction. As examples of such compounds, benzophenone-based polymerization initiators having a sulfide group-containing group, or polymerization initiator compositions containing a benzophenone-based polymerization initiator and an amine compound, have been proposed (Patent documents 1 to 3).

### Prior Art Documents

### Patent documents

Patent document 1: JP-A-2022-145340
Patent document 2: JP-A-S52-104592
Patent document 3: JP-A-2021-024974

### Summary of Invention

### Technical Problem

Conventional benzophenone-based polymerization initiators as described above and polymerization initiator compositions produced using the same have the problem that the reaction conversions are insufficient, and there has been room for further improvement. For example, benzophenone-based polymerization initiators having one thioether group in their structures are known to have absorption at long wavelengths, but it is still insufficient; it is necessary to further use an anthracene-based sensitizer and/or an acylphosphine oxide-based polymerization initiator in combination. Benzophenone-based polymerization initiators having two methylthio groups in their structures have absorption at longer wavelengths than those having one substituent, but the curability, that is, the reactivity, is still low. Furthermore, there is also a problem that the heat resistance is low.

The present invention has been made in view of the circumstances described above. An object thereof is to provide a polymerization initiator or a photosensitizer that allows photopolymerization to be efficiently proceeded with light having a wavelength of 365 nm and is also excellent in heat resistance, and to provide a polymerization initiator composition and a method for producing a resin.

### Solution to Problem

In order to address the above issues, the inventor of the present invention conducted extensive studies, and as a result, found that a polymerization initiator composition containing a benzophenone having two or more thioethers as sulfide groups bonded to an aromatic hydrocarbon skeleton, and various amine compounds, has higher sensitivity to ultraviolet radiation having a wavelength of 365 nm than conventional benzophenone initiators and is also excellent in photopolymerizability at this wavelength, thereby completing the present invention.

Specifically, a polymerization initiator or a photosensitizer according to the present invention includes the following component (A).

Component (A): a benzophenone derivative having two or more sulfide groups each bonded to an aromatic hydrocarbon group, the aromatic hydrocarbon group optionally having a substituent.

The polymerization initiator composition according to the present invention may contain the components (A) and (B) which are:
Component (A): a benzophenone derivative having two or more sulfide groups each bonded to an aromatic hydrocarbon group, the aromatic hydrocarbon group optionally having a substituent; and
Component (B): an amine compound having one or more hydrogen atoms bonded to a carbon atom adjacent to a nitrogen atom.

The polymerization initiator composition according to the present invention contains the components (A) and (C) which are:
Component (A): a benzophenone derivative having two or more sulfide groups each bonded to an aromatic hydrocarbon group, the aromatic hydrocarbon group optionally having a substituent; and
Component (C): a polymerization initiator selected from a radical polymerization initiator that undergoes intramolecular cleavage, a cationic polymerization initiator, and an anionic polymerization initiator.

A method for producing a resin according to the present invention includes adding the polymerization initiator or the photosensitizer to a resin material containing a monomer, and polymerizing the monomer by photopolymerization through irradiation with light having a wavelength of 365 nm.

### Advantageous Effects of Invention

According to the polymerization initiator or photosensitizer, the polymerization initiator composition, and the method for producing a resin according to the present invention, photopolymerization can be efficiently proceeded in a small amount under light having a wavelength of 365 nm, and excellent heat resistance is also exhibited.

### Description of Embodiments

Embodiments of the present invention will be specifically described below.

In this description, the numerical values for the number of carbon atoms represent integers.

### (Polymerization Initiator or Photosensitizer)

A polymerization initiator or photosensitizer according to the present invention includes the following component (A).

Component (A): a benzophenone derivative having two or more sulfide groups each bonded to an aromatic hydrocarbon group, which may have a substituent.

When the polymerization initiator or photosensitizer according to the present invention is a polymerization initiator, it is brought into an excited state upon irradiation with light having a wavelength of 365 nm, and reacts with another compound to generate a radical species. This radical species serves to initiate polymerization.

When the photosensitizer or photosensitizer according to the present invention is a photosensitizer, it is brought into an excited state upon irradiation with light having a wavelength of 365 nm, and transfers the excitation energy to another photopolymerization initiator, thereby allowing a polymerization reaction to proceed. This is useful in that a light source around 365 nm can be utilized even when a photopolymerization initiator having low sensitivity to light at 365 nm is used.

The benzophenone derivative as the component (A) has two or more sulfide groups each bonded to an aromatic hydrocarbon group which may have a substituent. The number of the sulfide groups is two or more, and there is no other particular limitation; it is preferably 2 to 4, more preferably 2. The bonding positions of the sulfide groups in the benzophenone derivative are not particularly limited; they are preferably at the 2- or 4-position, more preferably at the 4-position. Among these, 2,2'-substituted, 2,4'-substituted, and 4,4'-substituted structures are preferable, and a 4,4'-substituted structure is more preferable.

The sulfide groups each bonded to an aromatic hydrocarbon group which may have a substituent are groups each represented by formula defined as

[Chem. 1] -S-R

In the formula, R represents an aromatic hydrocarbon group which may have a substituent. The number of carbon atoms in the aromatic hydrocarbon group is not particularly limited; it is preferably 18 or less, more preferably 10 or less, and further preferably 6 or less. Specific examples of the aromatic hydrocarbon group include a phenyl group, a naphthyl group, and an anthracenyl group. Among these, a phenyl group is preferable.

In the case where the aromatic hydrocarbon group has a substituent, the type of substituent is not particularly limited, and examples thereof include a hydrocarbon group, an oxygen-containing group, a nitrogen-containing group, a sulfur-containing group, a phosphorus-containing group, and a halogen. Among these, a hydrocarbon group, an oxygen-containing group, a nitrogen-containing group, and a sulfur-containing group are preferable, and a hydrocarbon group is more preferable.

The hydrocarbon group is not particularly limited, and examples thereof include a saturated or unsaturated aliphatic hydrocarbon group, a saturated or unsaturated alicyclic hydrocarbon group, an aromatic hydrocarbon group, and a hydrocarbon group formed by combining them. The number of carbon atoms in the hydrocarbon group is preferably 1 to 22. Among these, a saturated aliphatic hydrocarbon group is preferable. The saturated aliphatic hydrocarbon group may be either linear or branched.

From the viewpoint of allowing photopolymerization to efficiently proceed, when the component (A) functions as a polymerization initiator, the number of carbon atoms in the linear or branched saturated aliphatic hydrocarbon group as the substituent of the R group is preferably 1 to 18, more preferably 1 to 12, further preferably 1 to 8, particularly preferably 1 to 4, especially preferably 2 to 4, and most preferably 3 or 4. Among the linear or branched saturated aliphatic hydrocarbon groups, a branched saturated aliphatic hydrocarbon group is preferable. Preferable examples include a 1-methylethan-1-yl group, a 1-methylpropan-1-yl group, a 2-methylpropan-1-yl group, and a 2-methylpropane-2-yl group.

The number of substituents in the R group may be 1 to 5, preferably 1 to 3, and more preferably 1 or 2.

When the component (A) functions as a photosensitizer, the number of carbon atoms in the linear or branched saturated aliphatic hydrocarbon group as the substituent of the R group is preferably 1 to 18, more preferably 1 to 12, further preferably 1 to 8, and particularly preferably 1 to 4. Among the linear or branched saturated aliphatic hydrocarbon groups, a branched saturated aliphatic hydrocarbon group is preferable.

The number of substituents in the R group may be 1 to 5, preferably 1 to 3, and more preferably 1 or 2.

The benzophenone derivative as the component (A) may have a substituent at a position other than the positions of the sulfide groups each bonded to an aromatic hydrocarbon group which may have a substituent, among the 2-to 6-positions and the 2'- to 6'-positions of the benzophenone skeleton. The number of such substituents is preferably 4 or less, more preferably 2 or less, and further preferably none. The type of substituent is not particularly limited, and examples thereof include a hydrocarbon group, an oxygen-containing group, a nitrogen-containing group, a sulfur-containing group, a phosphorus-containing group, and a halogen. Specific examples thereof include those mentioned above as the substituents of the aromatic hydrocarbon group represented by R, and reference is made to the description thereof.

In a preferred example, the benzophenone derivative as the component (A) is represented by the following formula (1):
[Chem. 2]

R¹-S-Ph-(C=O)-Ph-S-R² (1)

In the formula, R¹ and R² each independently represent an aromatic hydrocarbon group which may have a saturated aliphatic hydrocarbon group.

Specific examples of the aromatic hydrocarbon group in the aromatic hydrocarbon group which may have a saturated aliphatic hydrocarbon group include those mentioned above as the aromatic hydrocarbon group represented by R, and reference is made to the description thereof.

From the viewpoints of reactivity in photopolymerization, absorption of long-wavelength ultraviolet radiation (molar absorption coefficient at 365 nm), heat resistance, and compatibility with monomers or solvents, it is a preferable mode that R¹ and R² each independently represent an aromatic hydrocarbon group having a saturated aliphatic hydrocarbon group. The saturated aliphatic hydrocarbon group is preferably a linear or branched saturated aliphatic hydrocarbon group having 1 to 18 carbon atoms, more preferably 1 to 12 carbon atoms, further preferably 1 to 8 carbon atoms, particularly preferably 1 to 4 carbon atoms, especially preferably 2 to 4 carbon atoms, and most preferably 3 or 4 carbon atoms. Among the linear or branched saturated aliphatic hydrocarbon groups, a branched saturated aliphatic hydrocarbon group is preferable. Examples of preferable modes of R¹ and R² include an aromatic hydrocarbon group having two saturated aliphatic hydrocarbon groups. It is more preferable that the number of carbon atoms in the two saturated aliphatic hydrocarbon groups be 1 to 8. It is further preferable that one or more of the two be a butyl group. Another example of preferable modes of R¹ and R² includes an aromatic hydrocarbon group having one saturated aliphatic hydrocarbon group. It is more preferable that the number of carbon atoms in the saturated aliphatic hydrocarbon group be 3 or 4.

When the component (A) of the present invention has the above-described structure, that is, when it has two or more sulfide groups each bonded to an aromatic hydrocarbon group which may have a substituent, it has a higher molar absorption coefficient, in particular, a higher molar absorption coefficient in light of 365 nm, than known structures having one sulfide group bonded to an aromatic hydrocarbon group or known structures having two sulfide groups bonded to a saturated aliphatic hydrocarbon group. Therefore, photopolymerization can be efficiently performed, and it is useful as a photopolymerization initiator and/or a photosensitizer.

In the polymerization initiator or photosensitizer according to the present invention, the molar absorption coefficient of the component (A) at the maximum absorption wavelength is preferably 30000 L/(mol·cm) or more. It is useful that the molar absorption coefficient in longer-wavelength ultraviolet radiation be large. For example, it is preferable that the molar absorption coefficient at 365 nm be 3000 L/(mol·cm) or more, more preferably 4000 L/(mol·cm) or more, and further preferably 5000 L/(mol·cm) or more.

The component (A) of the present invention may remain in the resin even after the photopolymerization reaction. In such a case, when the heat resistance is low (the thermal decomposition temperature is low), the component (A) in a resin composition containing the component (A) thermally decomposes at high temperatures, resulting in problems such as bleed-out of decomposition products and discoloration and coloration of the resin. In this regard, it is preferable that the heat resistance be high (the thermal decomposition temperature be high). From the viewpoint of heat resistance, R¹ and R² in the formula (1) above are preferably branched saturated aliphatic hydrocarbon groups having 2 to 6 carbon atoms. The thermal decomposition temperature can be indicated by a 5% weight loss temperature. From the viewpoint of the molding temperatures of the resins described below, the 5% weight loss temperature of the component (A) is preferably 300°C or more, more preferably 320°C or more, and further preferably 335°C or more.

Examples of known molding temperatures for resins include the following. Although it is not particularly limited, for example, it can be applied to styrene resins (polystyrene: PS, molding temperature: 100°C), cycloolefin resins (molding temperature: 100°C), (meth)acrylic resins (polymethyl methacrylate, molding temperature: 160°C), and acrylonitrile-butadiene-styrene copolymers (acrylonitrile-butadiene-styrene copolymer: ABS, molding temperature: 220°C).

The above disclosure is also applicable to a method in which the component (A) is used to initiate a polymerization reaction of a monomer, and to a method in which the component (A) is used for photosensitization to transfer excitation energy to another photopolymerization initiator to initiate a polymerization reaction of a monomer.

### (Polymerization Initiator Composition)

A polymerization initiator composition according to the present invention contains components (A) and (B) which are:
Component (A): a benzophenone derivative having two or more sulfide groups each bonded to an aromatic hydrocarbon group, which may have a substituent; and
Component (B): an amine compound having one or more hydrogen atoms bonded to a carbon atom adjacent to a nitrogen atom.

The polymerization initiator composition according to the present invention contains components (A) and (C) which are:
Component (A): a benzophenone derivative having two or more sulfide groups each bonded to an aromatic hydrocarbon group, which may have a substituent; and
Component (C): a polymerization initiator selected from a radical polymerization initiator that undergoes intramolecular cleavage, a cationic polymerization initiator, and an anionic polymerization initiator.

The component (A) described herein is that described above as the polymerization initiator or photosensitizer according to the present invention, and reference is also made to the specific description of the component (A) for the mode of implementing the polymerization initiator composition according to the present invention. In the polymerization initiator composition according to the present invention containing the components (A) and (B), the component (A) can function primarily as a polymerization initiator. In the polymerization initiator composition according to the present invention containing the components (A) and (C), the component (A) can function primarily as a photosensitizer.

The polymerization initiator composition according to the present invention, which contains the components (A) and (B), generates a radical species through a reaction between molecules of the components (A) and (B). That is, the benzophenone derivative as the component (A) is brought into an excited state by light irradiation, and the excited state interacts with the amine compound as the component (B), which is a hydrogen donor, to abstract hydrogen from the amine compound, thereby generating an active radical in the amine compound. The subsequent polymerization is normally initiated by the radical generated from the amine compound.

The amine compound as the component (B) has one or more hydrogen atoms bonded to a carbon atom adjacent to a nitrogen atom.

The expression "one or more hydrogen atoms bonded to a carbon atom adjacent to a nitrogen atom" refers to a state in which at least one of the carbon atoms adjacent to a nitrogen atom has one or more hydrogen atoms. Therefore, this does not preclude the presence of another carbon atom that is adjacent to the nitrogen atom and does not have a hydrogen atom. Furthermore, an atom bonded to the nitrogen atom is not limited to a carbon atom; another atom such as a hydrogen atom may be bonded.

Such an amine compound is not particularly limited, and examples thereof include an aminobenzoic acid compound, an amine compound having an aliphatic hydrocarbon group and/or a hydroxyl group-containing saturated aliphatic hydrocarbon group bonded to a nitrogen atom, an amine compound having an aliphatic hydrocarbon group and an aromatic group bonded to a nitrogen atom, an amine compound having an aliphatic hydrocarbon group and an aliphatic hydrocarbon group having an unsaturated group-containing group bonded to a nitrogen atom, an amine compound having two or more nitrogen atoms, and a heterocyclic compound having a nitrogen atom. These amine compounds may contain two or more nitrogen atoms in one molecule. The amino group contained in the amine compound may be any of a primary amino group, a secondary amino group, and a tertiary amino group. An amine compound having a tertiary amino group is preferable. The carbon atoms adjacent to a nitrogen atom of the amine compound may be bonded to another atom through a double bond or triple bond, and at least one of them is preferably bonded to another carbon atom through a single bond. For example, when the amine compound is a tertiary amine compound, two or less of the three carbon atoms adjacent to the nitrogen atom may have an unsaturated bond, and one or more of them preferably do not have an unsaturated bond.

Among these, an aminobenzoic acid compound; an amine compound having an aliphatic hydrocarbon group and a hydroxyl group-containing saturated aliphatic hydrocarbon group bonded to a nitrogen atom; an amine compound having a hydroxyl group-containing saturated aliphatic hydrocarbon group bonded to a nitrogen atom; an amine compound having an aliphatic hydrocarbon group and an aliphatic hydrocarbon group having a carbon-carbon double bond-containing group bonded to a nitrogen atom; an amine compound having an aliphatic hydrocarbon group bonded to a nitrogen atom; an amine compound having an aliphatic hydrocarbon group and an aromatic group bonded to a nitrogen atom; an amine compound having an aliphatic hydrocarbon group bonded to a nitrogen atom and having two or more nitrogen atoms; and an amine compound containing a six-membered heterocyclic ring having a nitrogen atom are preferable. An aminobenzoic acid compound; an amine compound having an aliphatic hydrocarbon group and a hydroxyl group-containing saturated aliphatic hydrocarbon group bonded to a nitrogen atom; an amine compound having a hydroxyl group-containing saturated aliphatic hydrocarbon group bonded to a nitrogen atom; an amine compound having an aliphatic hydrocarbon group and an aliphatic hydrocarbon group having a carbon-carbon double bond-containing group bonded to a nitrogen atom; an amine compound having an aliphatic hydrocarbon group bonded to a nitrogen atom and having two or more nitrogen atoms; and an amine compound having an aliphatic hydrocarbon group and an aromatic group bonded to a nitrogen atom are more preferable. An aminobenzoic acid compound; an amine compound having an aliphatic hydrocarbon group and an aliphatic hydrocarbon group having a carbon-carbon double bond-containing group bonded to a nitrogen atom; and an amine compound having an aliphatic hydrocarbon group bonded to a nitrogen atom and having two or more nitrogen atoms are further preferable. An aminobenzoic acid compound is particularly preferable.

Among the above, the amine compound having an aliphatic hydrocarbon group and/or a hydroxyl group-containing saturated aliphatic hydrocarbon group bonded to a nitrogen atom, the amine compound having an aliphatic hydrocarbon group and a hydroxyl group-containing saturated aliphatic hydrocarbon group bonded to a nitrogen atom, the amine compound having a hydroxyl group-containing saturated aliphatic hydrocarbon group bonded to a nitrogen atom, and the amine compound having an aliphatic hydrocarbon group bonded to a nitrogen atom include, as preferable examples, amine compounds having only the groups shown herein bonded to a nitrogen atom. However, this does not necessarily preclude that a hydrogen atom is bonded to the nitrogen atom. The groups shown herein are primarily monovalent groups. However, this does not necessarily preclude that the groups are divalent groups, such as a divalent aliphatic hydrocarbon group having another group, such as an aromatic group, bonded to a terminal.

The amine compound having an aliphatic hydrocarbon group and an aromatic group bonded to a nitrogen atom includes, as preferable examples, amine compounds having only the groups shown herein bonded to a nitrogen atom. However, this does not necessarily preclude that a hydrogen atom is bonded to the nitrogen atom. Herein, the aromatic group may be an aromatic group composed only of hydrocarbons or may be a heterocyclic aromatic group containing a hetero atom, such as a nitrogen atom. The groups shown herein are primarily monovalent groups. However, this does not necessarily preclude that the groups are divalent groups, such as a divalent aliphatic hydrocarbon group having another group bonded to a terminal.

The amine compound having an aliphatic hydrocarbon group and an aliphatic hydrocarbon group having an unsaturated group-containing group bonded to a nitrogen atom, and the amine compound having an aliphatic hydrocarbon group and an aliphatic hydrocarbon group having a carbon-carbon double bond-containing group bonded to a nitrogen atom include, as preferable examples, amine compounds having only the groups shown herein bonded to a nitrogen atom. However, this does not necessarily preclude that a hydrogen atom is bonded to the nitrogen atom. The groups shown herein are primarily monovalent groups. However, this does not necessarily preclude that the groups are divalent groups, such as a divalent aliphatic hydrocarbon group having another group bonded to a terminal.

The amine compound having an aliphatic hydrocarbon group bonded to a nitrogen atom and having two or more nitrogen atoms includes, as preferable examples, amine compounds having only an aliphatic hydrocarbon group bonded to a nitrogen atom. However, this does not necessarily preclude that a hydrogen atom is bonded to at least one nitrogen atom. The aliphatic hydrocarbon group is a monovalent or divalent group. The divalent group includes an aliphatic hydrocarbon group having a nitrogen atom bonded to each terminal.

A preferable mode of the component (B) includes an aminobenzoic acid compound represented by the following formula (2) and an amine compound represented by the following formula (3) having an aliphatic hydrocarbon group or a hydroxyl group-containing saturated aliphatic hydrocarbon group bonded to a nitrogen atom.
[Chem. 3]

R³R⁴N-Ph-C(=O)-O-R⁵ (2)

In the formula, R³ and R⁴ each represent a saturated aliphatic hydrocarbon group, and R⁵ represents a hydrocarbon group.
[Chem. 4]

N(R⁶)ₙ(R⁷)₃₋ₙ (3)

In the formula, when n is 2 or more, R⁶ each independently represents an aliphatic hydrocarbon group or a hydroxyl group-containing saturated aliphatic hydrocarbon group, and R⁷ represents an aromatic group. n is an integer of 1 to 3. The aliphatic hydrocarbon group may have a phenyl group as a substituent.

In the formula (2), the saturated aliphatic hydrocarbon groups R³ and R⁴ preferably have 1 to 12 carbon atoms, more preferably 1 to 8 carbon atoms, further preferably 1 to 4 carbon atoms, and particularly preferably 1 or 2 carbon atoms. Specific examples thereof include a methyl group, an ethan-1-yl group, a propan-1-yl group, a 1-methylethan-1-yl group, a butan-1-yl group, a 1-methylpropan-1-yl group, a 2-methylpropan-1-yl group, a 2-methylpropan-2-yl group, a pentan-1-yl group, a pentan-2-yl group, a hexan-1-yl group, a heptan-1-yl group, an octan-1-yl group, a nonan-1-yl group, a decan-1-yl group, an undecan-1-yl group, and a dodecan-1-yl group.

The hydrocarbon group R⁵ is not particularly limited and may be any group composed of carbon and hydrogen; it is preferably a saturated or unsaturated aliphatic hydrocarbon group, and more preferably a saturated aliphatic hydrocarbon group, which preferably has 1 to 12 carbon atoms, more preferably has 1 to 8 carbon atoms, and further preferably has 1 to 4 carbon atoms. Examples of the saturated aliphatic hydrocarbon group include those exemplified above as R³ and R⁴.

In a particularly preferred example, R³, R⁴, and R⁵ are each independently a saturated aliphatic hydrocarbon group having 1 to 4 carbon atoms.

Specific examples of the aminobenzoic acid compound represented by the formula (2) above are not particularly limited, and examples thereof include ethyl dimethylaminobenzoate, ethyl methylethylaminobenzoate, and ethyl diethylaminobenzoate.

In the formula (3), the aliphatic hydrocarbon group R⁶ is a saturated or unsaturated aliphatic hydrocarbon group, and is preferably a saturated aliphatic hydrocarbon group. The aliphatic hydrocarbon group R⁶ preferably has 1 to 8 carbon atoms, more preferably 1 to 4 carbon atoms, and further preferably 1 carbon atom. The aliphatic hydrocarbon group R⁶ may have a phenyl group as a substituent. Among the aliphatic hydrocarbon groups R⁶, examples of the saturated ones include those exemplified above as R³ and R⁴. The hydroxyl group-containing saturated aliphatic hydrocarbon group R⁶ preferably has 1 to 8 carbon atoms, more preferably 1 to 4 carbon atoms, and further preferably 2 carbon atoms. The number of hydroxyl groups is preferably 1 to 5, more preferably 1 to 3, and further preferably 1. Specific examples thereof include a hydroxymethyl group, a hydroxyethan-1-yl group, a hydroxypropan-1-yl group, a hydroxybutan-1-yl group, a hydroxypentan-1-yl group, a hydroxyhexan-1-yl group, a hydroxyheptan-1-yl group, and a hydroxyoctan-1-yl group. A hydroxymethyl group, a hydroxyethan-1-yl group, a hydroxypropan-1-yl group, and a hydroxybutan-1-yl group are preferable, and a hydroxyethan-1-yl group is more preferable.

The aromatic group R⁷ preferably has 4 to 10 carbon atoms. The aromatic group may contain a nitrogen atom or a sulfur atom, and preferably contains a nitrogen atom. Examples of the aromatic group include a phenyl group, a naphthyl group, a pyrrolyl group, a pyridyl group, and an azepinyl group. A phenyl group and a pyridyl group are preferable. The amine compound in which R⁷ is an aromatic group is not particularly limited, and examples thereof include dimethylaminopyridine, dimethylaniline, and N,N-dimethylbenzylamine.

In the formula (3) above, n is preferably 3, and it is preferable that, among the n R⁶ groups, at least one be a hydroxyl group-containing saturated aliphatic hydrocarbon group and the others be aliphatic hydrocarbon groups. Specific examples of such an amine compound are not particularly limited, and examples thereof include dimethylethanolamine, methyldiethanolamine, triethanolamine, triethylamine, triisopropylamine, dimethylaminopyridine, and dimethylaniline. Dimethylethanolamine, methyldiethanolamine, and triethanolamine are preferable.

Among the amine compounds listed above as the component (B), the amine compound having an aliphatic hydrocarbon group and an aliphatic hydrocarbon group having an unsaturated group-containing group bonded to a nitrogen atom is not particularly limited, and examples thereof include amine compounds containing 1 to 4 nitrogen atoms and having an unsaturated group-containing group with 18 or less carbon atoms. An amine compound having an unsaturated group-containing group bonded to one end of a divalent aliphatic hydrocarbon group and a nitrogen atom bonded to the other end of the divalent aliphatic hydrocarbon group is preferable. The unsaturated group-containing group is not particularly limited, and examples thereof include groups containing a carbon-carbon double bond or triple bond or a carbon-heteroatom double bond or triple bond. A group containing a carbon-carbon double bond is preferable. The group containing a carbon-carbon double bond is not particularly limited, and examples thereof include groups containing a vinyl group, an allyl group, a (meth)acryloyl group, a (meth)acryloyloxy group, or an acrylamide group. Specific examples of such an amine compound are not particularly limited, and examples thereof include 2-dimethylaminoethyl acrylate.

Among the amine compounds listed above as the component (B), the amine compound having two or more nitrogen atoms is not particularly limited, and examples thereof include amine compounds containing 2 to 5 nitrogen atoms in which the nitrogen atoms are linked by a divalent saturated aliphatic hydrocarbon, and polyalkyleneimines. Specific examples of such an amine compound are not particularly limited, and examples thereof include ethylenediamine, dimethylethylenediamine, tetramethylethylenediamine, diethylenetriamine, pentamethyldiethylenetriamine, triethyltetramine, hexamethyltriethylenetetramine, tetraethylpentamine, piperazine, dimethylpiperazine, and polyethyleneimine having a molecular weight of 200 to 100000. The polyethyleneimine may have any of a linear, branched, or cyclic structure, and may be a mixture thereof. The nitrogen atoms contained in the polyethyleneimine may be any of primary, secondary, or tertiary amino groups, and may be a mixture thereof. The amine compound having an aliphatic hydrocarbon group bonded to a nitrogen atom and having two or more nitrogen atoms is preferably a linear and/or branched compound, and more preferably a branched compound.

Among the amine compounds listed above as the component (B), the heterocyclic compound having a nitrogen atom is not particularly limited, and examples thereof include, as a preferable mode, compounds containing 1 to 4 nitrogen atoms and having a saturated or unsaturated heterocyclic ring with 2 to 12 carbon atoms. Heterocyclic compounds containing a six-membered heterocyclic ring having a nitrogen atom are more preferable, and heterocyclic compounds containing 2 nitrogen atoms and 4 to 10 carbon atoms are further preferable. Specific examples of the heterocyclic compound having a nitrogen atom are not particularly limited, and examples thereof include diazabicyclooctane, diazabicycloundecene, diazabicyclononene, pyrrolizidine, quinuclidine, hexamine, and indolizidine.

The ratio between the components (A) and (B) in the polymerization initiator composition according to the present invention can be, in terms of molar ratio, 10:1 to 1:10, preferably 5:1 to 1:5, more preferably 3:1 to 1:3, and further preferably 1:1 to 1:3.

The amount of the polymerization initiator composition according to the present invention blended with the monomer is not particularly limited. From the viewpoint of allowing the reaction to proceed efficiently, it is preferable to add each of the components (A) and (B) in an amount of 0.01% by mass or more, more preferably each in an amount of 0.1% by mass or more, and further preferably each in an amount of 0.2% by mass or more.

The amount of the polymerization initiator composition according to the present invention blended with the monomer is not particularly limited. From the viewpoint of allowing the reaction to proceed efficiently, it is preferable to add each of the components (A) and (B) in an amount of 0.001 mol% or more, more preferably each in an amount of 0.01 mol% or more, and further preferably each in an amount of 0.1 mol% or more.

The polymerization initiator composition according to the present invention may contain other compounds in addition to the components (A) and (B) within a range such that the advantageous effects of the present invention are not impaired. Such other components are not particularly limited, and examples thereof include a solvent, a sensitizer, a silane coupling agent, an additive for resin, an antistatic agent, an ultraviolet absorber, and an antioxidant.

The polymerization initiator composition according to the present invention containing the components (A) and (C) generates a radical species, a cationic species, or an anionic species through a reaction between molecules of the components (A) and (C). Specifically, the benzophenone derivative as the component (A) is brought into an excited state by light irradiation, and the component (C) receives the excitation energy and thereby generates a radical species, a cationic species, or an anionic species. The subsequent polymerization is normally initiated by the radical species, the cationic species, or the anionic species generated from the component (C).

The polymerization initiator as the component (C) is selected from a radical polymerization initiator that undergoes intramolecular cleavage, a cationic polymerization initiator, and an anionic polymerization initiator.

The radical polymerization initiator that undergoes intramolecular cleavage is not particularly limited, and examples thereof include a benzyl ketal compound, a hydroxyacetophenone compound, an aminoacetophenone compound, and an acylphosphine oxide.

The benzyl ketal compound is not particularly limited, and examples thereof include 2,2-dimethoxy-2-phenylacetophenone.

The hydroxyacetophenone compound is not particularly limited, and examples thereof include 1-hydroxycyclohexyl phenyl ketone, 2-hydroxy-2-methyl-1-phenylpropanone, 1-(4-(2-hydroxyethoxy)-phenyl)-2-hydroxy-methylpropanone, and 2-hydroxy-1-(4-(4-(2-hydroxy-2-methylpropionyl)benzyl)phenyl)-2-methylpropan-1-one.

The aminoacetophenone compound is not particularly limited, and examples thereof include 2-benzyl-2-(dimethylamino)-1-[4-(morpholino)phenyl]-1-butanone, 2-methyl-1-[4-(methylthio)phenyl]-2-morpholinopropan-1-one, and 2-dimethylamino-2-(4-methyl-benzyl)-1-(4-morpholin-4-yl-phenyl)-butan-1-one.

The acylphosphine oxide is not particularly limited, and examples thereof include phenylbis(2,4,6-trimethylbenzoyl)phosphine oxide, 2,4,6-trimethylbenzoyl-diphenylphosphine oxide, and ethyl (2,4,6-trimethylbenzoyl)-phenylphosphinate.

The cationic polymerization initiator is not particularly limited, and examples thereof include a photoacid generator. The photoacid generator is not particularly limited, and examples thereof include an iodonium salt compound and a sulfonium salt compound. The iodonium salt compound is not particularly limited, and examples thereof include diphenyliodonium hexafluorophosphate and 4-methoxyphenylphenyliodonium trifluoroacetate. The sulfonium salt compound is not particularly limited, and examples thereof include triphenylsulfonium hexafluorophosphate, triphenylsulfonium trifluoromethanesulfonate, and diphenyl[4-(phenylthio)phenyl]sulfonium hexafluorophosphate. The cation portions of these compounds may be various cations and are not limited to the above examples.

The anionic polymerization initiator is not particularly limited, and examples thereof include a photobase generator. Examples thereof include 1,2-dicyclohexyl-4,4,5,5-tetramethylbiguanidinium n-butyltriphenylborate, and 1,2-diisopropyl-3-[bis(dimethylamino)methylene]guanidinium 2-(3-benzoylphenyl)propionate.

The ratio between the components (A) and (C) in the polymerization initiator composition according to the present invention can be, in terms of molar ratio, 10:1 to 1:100, preferably 1:1 to 1:100, more preferably 1:5 to 1:25, and further preferably 1:5 to 1:10.

The amount of the polymerization initiator composition according to the present invention blended with the monomer is not particularly limited. From the viewpoint of allowing the reaction to proceed efficiently, it is preferable to add each of the components (A) and (C) in an amount of 0.01% by mass or more, more preferably each in an amount of 0.05% by mass or more, and further preferably each in an amount of 0.1% by mass or more.

The amount of the polymerization initiator composition according to the present invention blended with the monomer is not particularly limited. From the viewpoint of allowing the reaction to proceed efficiently, it is preferable to add each of the components (A) and (C) in an amount of 0.001 mol% or more, more preferably each in an amount of 0.01 mol% or more, and further preferably each in an amount of 0.1 mol% or more.

The polymerization initiator composition according to the present invention may contain other compounds in addition to the components (A) and (C) within a range such that the advantageous effects of the present invention are not impaired. Such other components are not particularly limited, and examples thereof include a solvent, a sensitizer other than the component (C), a silane coupling agent, an additive for resin, an antistatic agent, an ultraviolet absorber, and an antioxidant.

The polymerization initiator composition according to the present invention is a polymerization initiator composition excellent in reaction conversion in the production of a resin by photopolymerization, and is particularly suitable for photopolymerization reactions in which an LED is used as a light source. In recent years, for the purpose of preventing contamination by ultraviolet radiation and due to an increase in the size of curing devices, devices capable of emitting longer-wavelength ultraviolet radiation, in particular, LED light sources, have come to be used. Among them, LEDs having wavelengths of 295 to 410 nm, preferably 295 to 390 nm, more preferably 340 to 390 nm, further preferably 360 to 370 nm, and particularly preferably 365 nm, have become the most generally used long-wavelength ultraviolet radiation light sources. There is a demand for the development of polymerization initiators adapted to this wavelength. The combination of the benzophenone derivative, which incorporates two or more thioethers as sulfide groups bonded to an aromatic hydrocarbon skeleton, and the amine compound has stronger sensitivity to long-wavelength ultraviolet radiation than conventional hydrogen-abstraction-type polymerization initiators and enhances the reactivity of unsaturated monomers.

From the viewpoint described above, in the polymerization initiator composition according to the present invention, the molar absorption coefficient of the component (A) at the maximum absorption wavelength is preferably 30000 L/(mol·cm) or more. It is useful that the molar absorption coefficient in longer-wavelength ultraviolet radiation be large. For example, it is preferable that the molar absorption coefficient at 365 nm be 3000 L/(mol·cm) or more, more preferably 4000 L/(mol·cm) or more, and further preferably 5000 L/(mol·cm) or more.

The above disclosure is also applicable to a method in which a composition containing the components (A) and (B) is used to initiate a polymerization reaction of a monomer. It is also applicable to a method in which a composition containing the components (A) and (C) is used to initiate a polymerization reaction of a monomer.

### (Resin Production Method)

A resin can be produced by adding the polymerization initiator or photosensitizer according to the present invention, in particular, the polymerization initiator composition according to the present invention that contains the polymerization initiator or photosensitizer, to a resin material containing a monomer and polymerizing the monomer by photopolymerization through irradiation with light having a wavelength of 365 nm. The mechanisms for the polymerization reaction are not particularly limited, and examples thereof include radical polymerization and ionic polymerization (cationic polymerization and anionic polymerization).

Examples of monomers (raw materials for resins) to which the polymerization initiator or photosensitizer according to the present invention, in particular, the polymerization initiator composition according to the present invention that contains the polymerization initiator or photosensitizer, is applied include compounds having a polymerizable unsaturated bond or a polymerizable cyclic structure. Examples of compounds having a polymerizable unsaturated bond are not particularly limited, and examples thereof include (meth)acrylate monomers, styrene monomers, vinyl monomers, allyl monomers, maleimide monomers, acrylamide monomers, olefin monomers, and cyclic olefin monomers. It is also applicable to mixtures of these monomers (raw materials for copolymers). Examples of compounds having a polymerizable cyclic structure are not particularly limited, and examples thereof include heterocyclic compounds, such as ethylene oxide, propylene oxide, ethylenimine, and ethylene sulfide. It is also applicable to mixtures of these monomers (raw materials for copolymers).

When a resin is produced using the polymerization initiator or photosensitizer according to the present invention, in particular, the polymerization initiator composition according to the present invention that contains the polymerization initiator or photosensitizer, photopolymerization can be performed by irradiating a resin material containing a monomer together with the polymerization initiator or photosensitizer with light having a wavelength of 365 nm.

Photopolymerization can also be performed in a solvent as needed. The solvent is not particularly limited, and examples thereof include solvents commonly used for chemical reactions, such as water, alcohols, and organic solvents. The polymerization initiator or photosensitizer according to the present invention, in particular the polymerization initiator composition according to the present invention that contains the polymerization initiator or photosensitizer, is useful for efficient photopolymerization in that it has excellent affinity with solvents. In particular, it is preferable that it can be mixed transparently when added to a solvent.

From the viewpoint of solubility in monomers, solvents, and the like, the component (A) of the present invention is preferably a benzophenone derivative having two sulfide groups each bonded to an aromatic hydrocarbon group which may have a substituent, more preferably a benzophenone derivative having two sulfide groups each bonded to an aromatic hydrocarbon group having a saturated aliphatic hydrocarbon group, and further preferably a benzophenone derivative in which R¹ and R² in the formula (1) above are branched saturated aliphatic hydrocarbon groups. Another preferable mode is one in which two saturated aliphatic hydrocarbon groups are bonded to the aromatic hydrocarbon group.

When the aromatic hydrocarbon group is a benzene residue, it is preferable that the saturated aliphatic hydrocarbon group be bonded to a position other than the para-position of the carbon atom to which the sulfur atom is bonded.

### Examples

The present invention will be described in detail below with reference to the following examples. However, the present invention is not limited to these working examples.

### 1. Benzophenone Derivatives

The benzophenone derivative as the component (A) was obtained as follows.

### (1) 4,4'-Diphenylthiobenzophenone

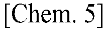

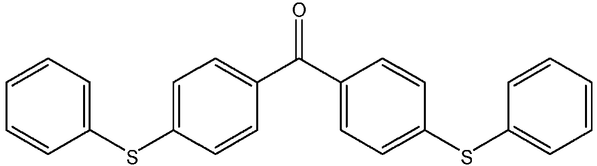

4,4'-dichlorobenzophenone (5.0 g), potassium carbonate (12 g), potassium iodide (1.0 g), and DMF (15 g) were mixed, and the resulting mixture was stirred. Benzenethiol (5.7 g) was added to the mixture, followed by heating at 110°C for 12 hours. Then, the mixture was cooled to 70°C, followed by addition of ion-exchange water, and the mixture was further cooled to room temperature. The solid precipitated after cooling was separated, and dissolved in toluene by heating at 80°C, followed by addition of 37% aqueous hydrogen chloride solution and heating for 15 minutes. Subsequently, the aqueous layer was separated, and the toluene solution was washed with water. Methanol was added to the toluene solution to perform recrystallization, thereby obtaining 4,4'-diphenylthiobenzophenone.

IR (KBr): 2360 cm⁻¹, 1645 cm⁻¹, 1588 cm⁻¹, 1310 cm⁻¹, 1278 cm⁻¹, 1080 cm⁻¹, 928 cm⁻¹, 740 cm⁻¹.

¹H NMR (CDCl₃, 400 MHz): 7.21-7.24 (d, 4H, Ph), 7.38-7.42 (d, 4H, Ph), 7.50-7.52 (d, 4H, Ph), 7.64-7.67 (d, 4H, Ph).

¹³C NMR (CDCl₃, 100 MHz): 127.6, 128.8, 129.8, 130.7, 132.2, 133.7, 134.8, 144.1, 194.8.

### (2) 4,4'-Ditolylthiobenzophenone

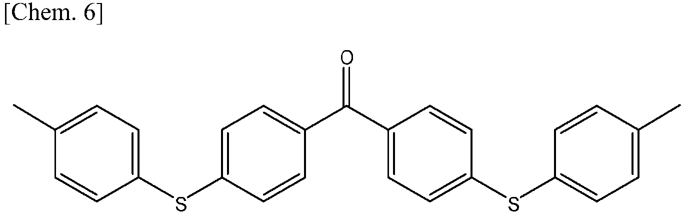

4,4'-dichlorobenzophenone (5.0 g), potassium carbonate (12 g), potassium iodide (1.0 g), and DMF (15 g) were mixed, and the resulting mixture was stirred. p-toluenethiol (6.5 g) was added to the mixture, followed by heating at 110°C for 12 hours. Then, the mixture was cooled to 70°C, followed by addition of ion-exchange water, and the mixture was further cooled to room temperature. The solid precipitated after cooling was separated, and dissolved in toluene by heating at 80°C, followed by addition of 37% aqueous hydrogen chloride solution and heating for 15 minutes. Subsequently, the aqueous layer was separated, and the toluene solution was washed with water. Methanol was added to the toluene solution to perform recrystallization, thereby obtaining 4,4'-ditolylthiobenzophenone.

IR (KBr): 2363 cm⁻¹, 1652 cm⁻¹, 1586 cm⁻¹, 1491 cm⁻¹, 1308 cm⁻¹, 1274 cm⁻¹, 1081 cm⁻¹, 1081 cm⁻¹, 925 cm⁻¹, 825 cm⁻¹, 803 cm⁻¹, 754 cm⁻¹, 487 cm⁻¹.

¹H NMR (CDCl₃, 400 MHz): 2.40 (s, 6H, Me), 7.15-7.18 (d, 4H, Ph), 7.21-7.23 (d, 4H, Ph), 7.41-7.43 (d, 4H, Ph), 7.60-7.62 (d, 4H, Ph).

¹³C NMR (CDCl₃, 100 MHz): 21.3 (Me), 126.5, 128.1, 130.5, 130.6, 134.4, 134.6, 139.3, 145.0 (Ph), 194.8 (C=O).

### (3) 4,4'-Bis(p-isopropylphenylthio)benzophenone

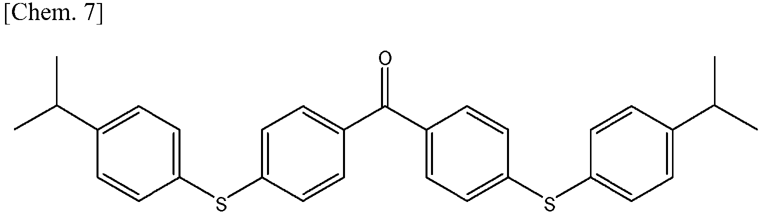

4,4'-dichlorobenzophenone (5.0 g), potassium carbonate (12 g), potassium iodide (1.0 g), and DMF (15 g) were mixed, and the resulting mixture was stirred. p-isopropylbenzenethiol (7.3 g) was added to the mixture, followed by heating at 110°C for 12 hours. Then, the mixture was cooled to 70°C, followed by addition of ion-exchange water, and the mixture was further cooled to room temperature. The solid precipitated after cooling was separated, and dissolved in toluene by heating at 80°C, followed by addition of 37% aqueous hydrogen chloride solution and heating for 15 minutes. Subsequently, the aqueous layer was separated, and the toluene solution was washed with water. Methanol was added to the toluene solution to perform recrystallization, thereby obtaining 4,4'-bis(p-isopropylphenylthio)benzophenone.

IR (KBr): 2960 cm⁻¹, 2360 cm⁻¹, 1652 cm⁻¹, 1586 cm⁻¹, 1486 cm⁻¹, 1285 cm⁻¹, 1079 cm⁻¹, 827 cm⁻¹, 753 cm⁻¹.

¹H NMR (CDCl₃, 400 MHz): 1.27-1.28 (d, 6H, Me), 2.91-2.98 (m, 1H, -CHMe₂), 7.17-7.19 (d, 2H, Ph), 7.26-7.28 (d, 2H, Ph), 7.43-7.46 (d, 2H, Ph), 7.63-7.65 (d, 2H, Ph).

¹³C NMR (CDCl₃, 100 MHz): 23.7 (Me), 34.1 (-CHMe₂), 126.5, 127.9, 128.4, 130.5, 134.3, 134.6, 150.0, 197.8 (Ph).

### (4) 4,4'-Bis(p-tert-butylphenylthio)benzophenone

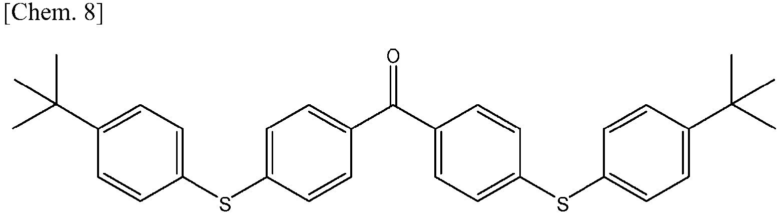

4,4'-dichlorobenzophenone (5.0 g), potassium carbonate (12 g), potassium iodide (1.0 g), and DMF (15 g) were mixed, and the resulting mixture was stirred. p-tert-butylbenzenethiol (8.0 g) was added to the mixture, followed by heating at 110°C for 12 hours. Then, the mixture was cooled to 70°C, followed by addition of ion-exchange water, and the mixture was further cooled to room temperature. The solid precipitated after cooling was separated, and dissolved in toluene by heating at 80°C, followed by addition of 37% aqueous hydrogen chloride solution and heating for 15 minutes. Subsequently, the aqueous layer was separated, and the toluene solution was washed with water. Methanol was added to the toluene solution to perform recrystallization, thereby obtaining 4,4'-bis(p-tert-butylphenylthio)benzophenone.

IR (KBr): 2959 cm⁻¹, 2360 cm⁻¹, 1644 cm⁻¹, 1587 cm⁻¹, 1309 cm⁻¹, 1287 cm⁻¹, 834 cm⁻¹

¹H NMR (CDCl₃, 400 MHz): 1.34 (s, 9H, -CMe₃)

¹³C NMR (CDCl₃, 100 MHz): 31.1 (Me), 34.8 (-CMe₃), 126.5, 127.0, 128.2, 130.4, 133.8, 134.6, 144.8, 152.4 (Ph), 194.9 (C=O).

### (5) 4-(p-Tolylthio)benzophenone

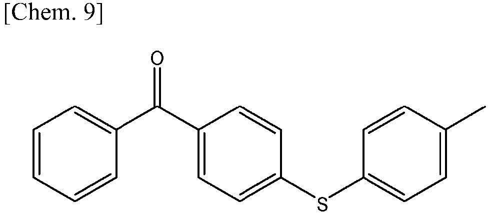

4-chlorobenzophenone (4.3 g), potassium carbonate (6.0 g), potassium iodide (0.5 g), and DMF (13 g) were mixed, and the resulting mixture was stirred. p-toluenethiol (3.0 g) was added to the mixture, followed by heating at 110°C for 12 hours. Then, the mixture was cooled to 70°C, followed by addition of ion-exchange water, and the mixture was further cooled to room temperature. The solid precipitated after cooling was separated, and dissolved in toluene by heating at 80°C, followed by addition of 37% aqueous hydrogen chloride solution and heating for 15 minutes. Subsequently, the aqueous layer was separated, and the toluene solution was washed with water. Methanol was added to the toluene solution to perform recrystallization, thereby obtaining 4-(p-tolylthio)benzophenone.

IR (KBr): 2959 cm⁻¹, 2360 cm⁻¹, 1644 cm⁻¹, 1587 cm⁻¹, 1309 cm⁻¹, 1287 cm⁻¹, 834 cm⁻¹

¹H NMR (CDCl₃, 400 MHz): 2.40 (s, 3H, Me), 7.16-7.24 (m, 4H, Ph), 7.42-7.48 (m, 4H, Ph), 7.55-7.58 (t, 1H, Ph), 7.67-7.68 (d, 2H, Ph), 7.74-7.77 (d, 2H, Ph).

¹³C NMR (CDCl₃, 100 MHz): 21.3 (Me), 126.5, 128.0, 128.3, 129.9, 130.5, 130.7, 132.2, 134.4, 134.5, 137.7, 139.3, 145.3 (Ph), 195.8 (C=O).

### (6) 4,4'-Bis(methylthio)benzophenone

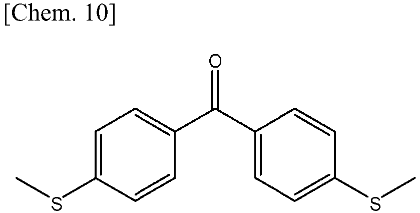

4,4'-dichlorobenzophenone (5.0 g), potassium carbonate (12 g), potassium iodide (1.0 g), and DMF (30 g) were mixed, and the resulting mixture was stirred. A 15% aqueous sodium methanethiolate solution (20 g) was added to the mixture, followed by heating at 110°C for 12 hours. Then, the mixture was cooled to 70°C, followed by addition of ion-exchange water, and the mixture was further cooled to room temperature. The solid precipitated after cooling was separated, and dissolved in toluene by heating at 80°C, followed by addition of 37% aqueous hydrogen chloride solution and heating for 15 minutes. Subsequently, the aqueous layer was separated, and the toluene solution was washed with water. Methanol was added to the toluene solution to perform recrystallization, thereby obtaining 4,4'-bis(methylthio)benzophenone.

IR (KBr): 2357 cm⁻¹, 1650 cm⁻¹, 1276 cm⁻¹, 804 cm⁻¹, 726 cm⁻¹, 695 cm⁻¹, 474 cm⁻¹.

¹H NMR (CDCl₃, 400 MHz): 2.55 (s, 6H, Me), 7.28-7.31 (d, 4H, Ph), 7.71-7.73 (d, 4H, Ph).

¹³C NMR (CDCl₃, 100 MHz): 14.9 (Me), 124.5, 130.5, 136.2, 145.0 (Ph), 194.9 (C=O).

### (7) 4,4'-Bis(octylthio)benzophenone

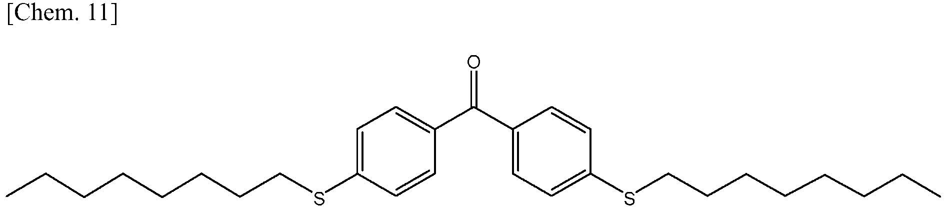

4,4'-dichlorobenzophenone (5.0 g), potassium carbonate (12 g), potassium iodide (1.0 g), and DMF (15 g) were mixed, and the resulting mixture was stirred. Octanethiol (12 g) was added to the mixture, followed by heating at 110°C for 12 hours. Then, the mixture was cooled to 70°C, followed by addition of ion-exchange water, and the mixture was further cooled to room temperature. The solid precipitated after cooling was separated, and dissolved in toluene by heating at 80°C, followed by addition of 37% aqueous hydrogen chloride solution and heating for 15 minutes. Subsequently, the aqueous layer was separated, and the toluene solution was washed with water. Methanol was added to the toluene solution to perform recrystallization, thereby obtaining 4,4'-bis(octylthio)benzophenone.

IR (KBr): 2923 cm⁻¹, 2852 cm⁻¹, 1634 cm⁻¹, 1590 cm⁻¹, 1398 cm⁻¹, 1293 cm⁻¹, 1090 cm⁻¹, 729 cm⁻¹.

¹H NMR (CDCl₃, 400 MHz): 0.87-0.91 (t, 3H, Me), 1.23-1.37 (m, 16H, -CH₂-), 1.43-1.50 (m, 4H, -CH₂-), 1.68-1.76 (m, 4H, -CH₂-), 2.98-3.03 (t, 4H, -SCH₂-), 7.31-7.34 (d, 4H, Ph), 7.70-7.72 (d, 4H, Ph).

¹³C NMR (CDCl₃, 100 MHz): 14.1, 22.6, 28.8, 28.9, 29.1, 31.8, 32.0, 32.1 (fatty chain), 126.1, 130.5, 131.2, 144.0 (Ph), 195.0 (C=O).

### (9) 4,4'-Dithio(4-tert-butyl-2-methylphenyl)benzophenone

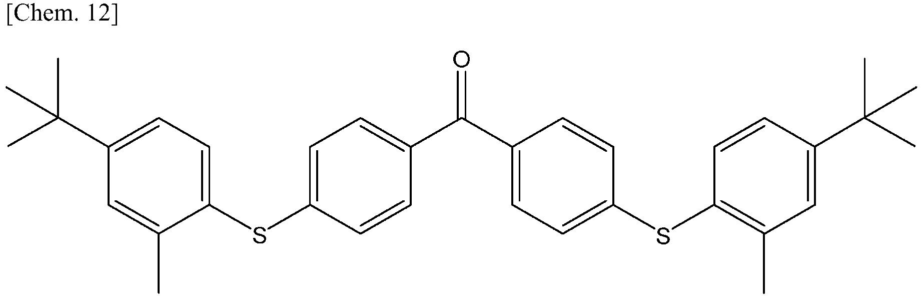

4,4'-dichlorobenzophenone (5.0 g), potassium carbonate (12 g), potassium iodide (1.0 g), and DMF (15 g) were mixed, and the resulting mixture was stirred. 5-tert-butyl-2-methylbenzenethiol (8.7 g) was added to the mixture, followed by heating at 100°C for 12 hours. Then, the mixture was cooled to 70°C, followed by addition of ion-exchange water, and the mixture was further cooled to room temperature. The solid precipitated after cooling was separated, and dissolved in toluene by heating at 80°C, followed by addition of 37% aqueous hydrogen chloride solution and heating for 15 minutes. Subsequently, the aqueous layer was separated, and the toluene solution was washed with water. Methanol was added to the toluene solution to perform recrystallization, thereby obtaining 4,4'-dithio(4-tert-butyl-2-methylphenyl)benzophenone.

IR (KBr): 2963 cm⁻¹, 2362 cm⁻¹, 1640 cm⁻¹, 1586 cm⁻¹, 1287 cm⁻¹, 1082 cm⁻¹, 926 cm⁻¹, 754 cm⁻¹.

¹H NMR (CDCl₃, 400 MHz): 1.30 (s, 18H, tBu), 2.33 (s, 6H, Me), 7.05-7.07 (d, 4H, Ph), 7.25-7.28 (d, 2H, Ph), 7.36-7.37 (d, 2H, Ph), 7.56 (s, 2H, Ph), 7.61-7.63 (d, 4H, Ph).

¹³C NMR (CDCl₃, 100 MHz): 20.1 (Ph-CH₃), 31.3 (C(CH₃)₃), 34.5 (C(CH₃)₃), 125.7, 126.9, 129.5, 130.6, 130.8, 133.2, 134.2, 139.3, 144.6, 150.4 (Ph), 194.9 (C=O).

### (10) 4,4'-Dithio(3-methylphenyl)benzophenone

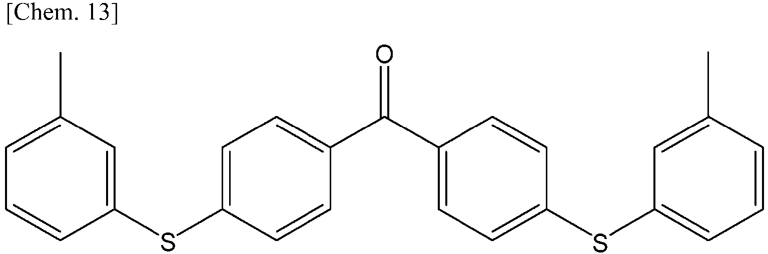

4,4'-dichlorobenzophenone (5.0 g), potassium carbonate (12 g), potassium iodide (1.0 g), and DMF (15 g) were mixed, and the resulting mixture was stirred. m-toluenethiol (6.0 g) was added to the mixture, followed by heating at 100°C for 12 hours. Then, the mixture was cooled to 70°C, followed by addition of ion-exchange water, and the mixture was further cooled to room temperature. The solid precipitated after cooling was separated, and dissolved in toluene by heating at 80°C, followed by addition of 37% aqueous hydrogen chloride solution and heating for 15 minutes. Subsequently, the aqueous layer was separated, and the toluene solution was washed with water. Methanol was added to the toluene solution to perform recrystallization, thereby obtaining 4,4'-dithio(3-methylphenyl)benzophenone.

IR (KBr): 2358 cm⁻¹, 1642 cm⁻¹, 1310 cm⁻¹, 1282 cm⁻¹, 1077 cm⁻¹, 927 cm⁻¹, 846 cm⁻¹, 781 cm⁻¹, 750 cm⁻¹.

¹H NMR (CDCl₃, 400 MHz): 2.37 (s, 6H, Me), 7.21-7.23 (m, 6H, Ph), 7.27-7.31 (t, 4H, Ph), 7.34 (s, 2H, Ph), 7.64-7.66 (d, 4H, Ph).

¹³C NMR (CDCl₃, 100 MHz): 21.3 (Me), 127.3, 129.5, 129.6, 130.6, 130.9, 131.8, 134.4, 134.8, 139.6, 144.3 (Ph), 194.8 (C=O).

### (11) 4,4'-Dithio(2,4-dimethylphenyl)benzophenone

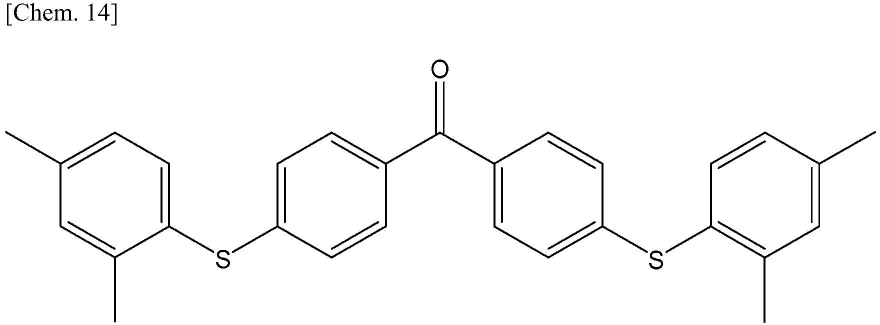

4,4'-dichlorobenzophenone (5.0 g), potassium carbonate (12 g), potassium iodide (1.0 g), and DMF (15 g) were mixed, and the resulting mixture was stirred. 2,4-dimethylbenzenethiol (6.0 g) was added to the mixture, followed by heating at 100°C for 12 hours. Then, the mixture was cooled to 70°C, followed by addition of ion-exchange water, and the mixture was further cooled to room temperature. The solid precipitated after cooling was separated, and dissolved in toluene by heating at 80°C, followed by addition of 37% aqueous hydrogen chloride solution and heating for 15 minutes. Subsequently, the aqueous layer was separated, and the toluene solution was washed with water. Methanol was added to the toluene solution to perform recrystallization, thereby obtaining 4,4'-dithio(2,4-dimethylphenyl)benzophenone.

IR (KBr): 2361 cm⁻¹, 1644 cm⁻¹, 1588 cm⁻¹, 1399 cm⁻¹, 1311 cm⁻¹, 1285 cm⁻¹, 1079 cm⁻¹, 928 cm⁻¹, 809 cm⁻¹, 753 cm⁻¹.

¹H NMR (CDCl₃, 400 MHz): 2.34 (s, 6H, Me), 2.37 (s, 6H, Me), 7.03-7.07 (m, 6H, Ph), 7.16 (s, 2H, Ph), 7.42-7.44 (d, 2H, Ph), 7.59-7.61 (d, 4H, Ph).

¹³C NMR (CDCl₃, 100 MHz): 20.6, 21.2 (Me), 125.6, 126.6, 128.0, 130.6, 134.2, 136.3, 140.1, 142.3, 144.8 (Ph), 194.8 (C=O).

### (12) 4,4'-Dithio(2,5-dimethylphenyl)benzophenone

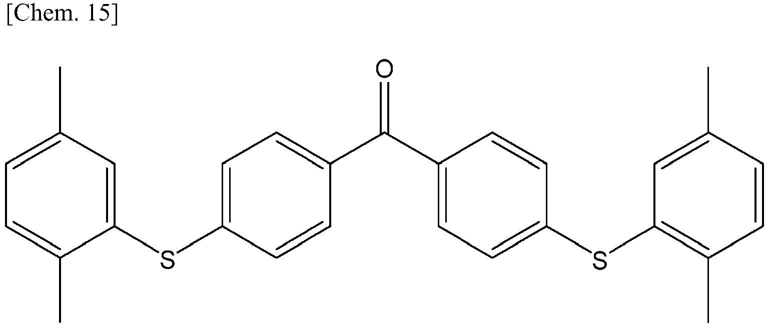

4,4'-dichlorobenzophenone (5.0 g), potassium carbonate (12 g), potassium iodide (1.0 g), and DMF (15 g) were mixed, and the resulting mixture was stirred. 2,5-dimethylbenzenethiol (6.0 g) was added to the mixture, followed by heating at 100°C for 12 hours. Then, the mixture was cooled to 70°C, followed by addition of ion-exchange water, and the mixture was further cooled to room temperature. The solid precipitated after cooling was separated, and dissolved in toluene by heating at 80°C, followed by addition of 37% aqueous hydrogen chloride solution and heating for 15 minutes. Subsequently, the aqueous layer was separated, and the toluene solution was washed with water. Methanol was added to the toluene solution to perform recrystallization, thereby obtaining 4,4'-dithio(2,5-dimethylphenyl)benzophenone.

IR (KBr): 2919 cm⁻¹, 1650 cm⁻¹, 1585 cm⁻¹, 1488 cm⁻¹, 1284 cm⁻¹, 1083 cm⁻¹, 924 cm⁻¹, 754 cm⁻¹.

¹H NMR (CDCl₃, 400 MHz): 2.32 (s, 3H, Me), 2.33 (s, 3H, Me), 7.05-7.08 (s, 4H, Ph), 7.13-7.24 (m, 6H, Ph), 7.35 (s, 2H, Me), 7.61-7.63 (d, 4H, Ph).

¹³C NMR (CDCl₃, 100 MHz): 20.2, 20.8 (Me), 125.9, 128.2, 128.6, 129.1, 130.6, 130.9, 134.3, 136.5, 136.8, 139.1, 144.4 (Ph), 194.8 (C=O).

### 2. UV Absorption Characteristics of Component (A)

A 100 µM chloroform solution of each benzophenone derivative was prepared and placed in a 10-mm quartz cell. The absorption spectrum was measured using a UV-visible spectrophotometer (V-550, manufactured by JASCO Corporation). Table 1 shows the maximum absorption wavelength, the molar absorption coefficient at the maximum absorption wavelength, and the molar absorption coefficient at 365 nm.

When the component (A) was any of A-1 to A-4 and A-9 to A-12 in the working examples, it was confirmed that the molar absorption coefficient at the maximum absorption wavelength was 30000 L/(mol·cm) or more and that light could be efficiently absorbed. In particular, when the component (A) was any of A-1 to A-4 and A-9 to A-12 in the working examples, it was confirmed that the molar absorption coefficient at 365 nm was 3000 L/(mol·cm) or more and that the ability to absorb light having a wavelength of 365 nm was higher than that of A-5 to A-7 in the comparative examples. These results suggest that the polymerization initiator composition according to the present invention containing the component (A) is useful for photoradical polymerization using an LED as a light source.

Among the working examples, benzophenone derivatives having two sulfide groups each bonded to an aromatic hydrocarbon group having one saturated aliphatic hydrocarbon group as a substituent, such as A-2 to A-4 and A-10, had a molar absorption coefficient at 365 nm of 4000 L/(mol·cm) or more. In particular, when R¹ and R² in the formula (1) were branched saturated aliphatic hydrocarbon groups as in A-3 and A-4, the molar absorption coefficient at 365 nm was 5000 L/(mol·cm) or more, and it was confirmed that such benzophenone derivatives are more useful.

### 3. Heat Resistance of Component (A)

The 5% weight loss temperature of each benzophenone derivative was measured as follows. Using a simultaneous differential thermal and thermogravimetric analyzer (TG/DTA6200, manufactured by SII), heating was performed at a heating rate of 10°C/min in a measurement range of 25°C to 550°C, and the temperature at which the weight change (TG) decreased by 5% by weight was read. Table 1 shows the results.

These results confirm that, when the component (A) was any of A-1 to A-4 and A-9 to A-12 in the working examples, the 5% weight loss temperature was 300°C or more, and the heat resistance was superior to that of A-5 to A-7 in the comparative examples. This suggests that, when the component (A) is present in the resin after the polymerization reaction, the polymerization initiator composition according to the present invention containing the component (A) does not undergo decomposition even during high-temperature molding of the resin, and problems such as bleed-out of decomposition products and discoloration or coloration of the resin are reduced.

Among the working examples, benzophenone derivatives having two sulfide groups each bonded to an aromatic hydrocarbon group having a saturated aliphatic hydrocarbon group as a substituent, such as A-2 to A-4 and A-9 to A-12, had a 5% weight loss temperature of 300°C or more. In particular, when R¹ and R² in the formula (1) were branched saturated aliphatic hydrocarbon groups as in A-3, A-4, and A-9, the 5% weight loss temperature was 335°C or more, and such benzophenone derivatives are useful because they are applicable to higher molding temperatures.

**[Table 1]**

| No. | Component A (benzophenone derivative) | | UV absorption characteristics | | | 5% weight loss temperature (°C) |
|---|---|---|---|---|---|---|
| | | | Maximum absorption wavelength | | Molar absorption coefficient at 365 nm (L/(mol·cm)) | |
| | | | Wavelength (nm) | Molar absorption coefficient (L/(mol·cm)) | | |
| Working example 1 | A-1 | 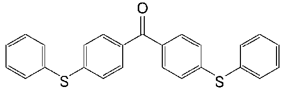 | 326 | 32880 | 3900 | 314 |
| Working example 2 | A-2 | 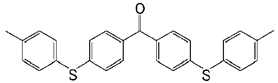 | 327 | 31500 | 4400 | 329 |
| Working example 3 | A-3 | 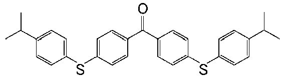 | 327 | 31440 | 5130 | 342 |
| Working example 4 | A-4 | 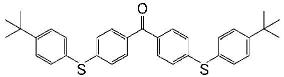 | 328 | 31120 | 5240 | 351 |
| Working example 24 | A-9 | 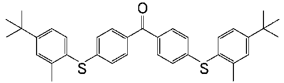 | 329 | 32600 | 3870 | 338 |
| Working example 25 | A-10 | 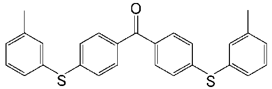 | 328 | 30730 | 4280 | 330 |
| Working example 26 | A-11 | 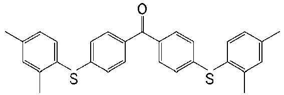 | 329 | 31640 | 3830 | 332 |
| Working example 27 | A-12 | 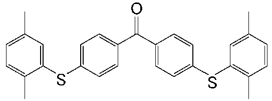 | 328 | 31590 | 3250 | 311 |
| Comparative example 1 | A-5 | 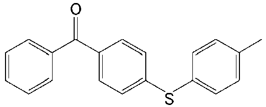 | 316 | 13200 | 700 | 235 |
| Comparative example 2 | A-6 | 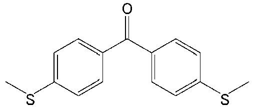 | 323 | 25100 | 1100 | 239 |
| Comparative example 3 | A-7 | 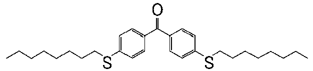 | 326 | 24800 | 2000 | 282 |

### 4. Reactivity of Polymerization Initiator Composition (1)

In the combinations shown in Tables 2A, 2B, 3A, 3B, and 3C, 0.15 g of the component (A) (benzophenone derivative) and 0.15 g of the component (B) (amine compound) were dissolved in 3.0 g of butyl acrylate as a monomer. This reaction solution was irradiated with light at 365 nm using an LED light source to perform a polymerization reaction. The viscous solids obtained after 5 minutes of light irradiation (accumulated light dose: 500 mJ/cm²) and 10 minutes of light irradiation (accumulated light dose: 1000 mJ/cm²) were dissolved in a 0.05 wt% deuterated chloroform solution of dibutylhydroxytoluene (BHT) to stop the polymerization reaction, and the resulting solutions were used as samples for NMR measurement. Using NMR (BRUKER: ULTRASHILDE 400PLUS), the reaction conversion was determined from the decrease ratio of the peak derived from the olefin of butyl acrylate, with reference to the peak of butyl acrylate before the reaction as being 100.

From Tables 2A and 2B, it was confirmed that the polymerization reaction proceeded when the polymerization initiator composition containing the components (A) and (B) was used, while the reaction did not proceed when only one of the components was used as in the comparative examples 4 and 5. When the component (B) was B-1, in the working examples 5 to 8 and 28 to 31 in which the component (A) was any of A-1 to A-4 and A-9 to A-12, the reaction conversion after 5 minutes from the initiation of the reaction was 90% or more, and it was confirmed that the reactivity was superior to that in the comparative examples 6 to 9 in which any of A-5 to A-8 was used. This suggests that the polymerization initiator composition according to the present invention can efficiently proceed with photopolymerization.

Among the working examples, it was confirmed that photopolymerization proceeded more efficiently when the component (A) was any of A-3, A-4, A-9, A-11, and A-12, and such polymerization initiator compositions are useful.

From Tables 3A, 3B, and 3C, it was confirmed that, when the component (A) was A-1, the photopolymerization reaction proceeded in the cases where the component (B) was any of B-1 to B-20 as in the working examples. This suggests that the polymerization initiator composition according to the present invention can efficiently proceed with photopolymerization.

Among the working examples, when the component (B) was any of B-1 (aminobenzoic acid compound), B-2 and B-4 (amine compounds having an aliphatic hydrocarbon group and a hydroxyl group-containing saturated aliphatic hydrocarbon group bonded to a nitrogen atom), B-3 (amine compound having a hydroxyl group-containing saturated aliphatic hydrocarbon group bonded to a nitrogen atom), B-5 (amine compound containing a six-membered heterocyclic ring having a nitrogen atom), B-10 (amine compound having an aliphatic hydrocarbon group and an aliphatic hydrocarbon group having an unsaturated group-containing group bonded to a nitrogen atom), B-11 to B-13 and B-16 to B-18 (amine compounds having an aliphatic hydrocarbon group bonded to a nitrogen atom and having two or more nitrogen atoms), B-14 (amine compound having an aliphatic hydrocarbon group and an aromatic group bonded to a nitrogen atom), and B-15 (amine compound having an aliphatic hydrocarbon group bonded to a nitrogen atom), the reaction conversion after 5 minutes was 80% or more, and such polymerization initiator compositions are effective in photopolymerization. Furthermore, when the component (B) is any of B-1, B-2, B-3, B-4, B-10, B-11 to B-13, and B-14, the reaction conversion after 5 minutes was 90% or more, and such polymerization initiator compositions are useful. In particular, when the component (B) was any of B-1, B-10, and B-12, the reaction conversion after 5 minutes was 95% or more, and such polymerization initiator compositions are useful.

**[Table 2A]**

| No. | Polymerization initiator composition | | | | Monomer | Reaction conversion (%) | |
|---|---|---|---|---|---|---|---|
| | Component (A) | | Component (B) | | | 5 min | 10 min |
| Working example 5 | A-1 | 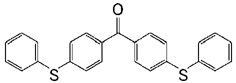 | B-1 | 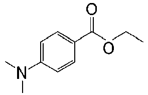 | 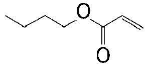 | 98 | >99 |
| Working example 6 | A-2 | 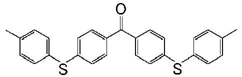 | B-1 | 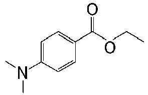 | 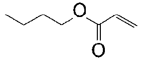 | 98 | >99 |
| Working example 7 | A-3 | 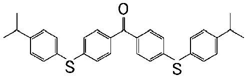 | B-1 | 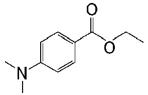 | 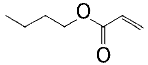 | >99 | >99 |
| Working example 8 | A-4 | 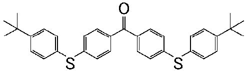 | B-1 | 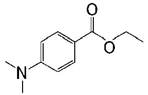 | 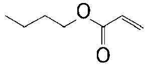 | >99 | >99 |
| Working example 28 | A-9 | 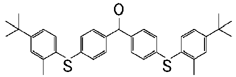 | B-1 | 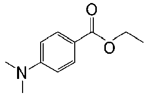 | 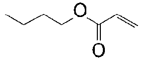 | >99 | >99 |
| Working example 29 | A-10 | 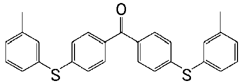 | B-1 | 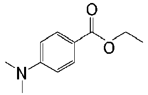 | 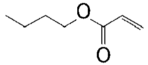 | 98 | >99 |
| Working example 30 | A-11 | 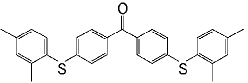 | B-1 | 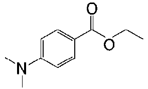 | 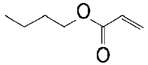 | >99 | >99 |
| Working example 31 | A-12 | 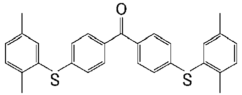 | B-1 | 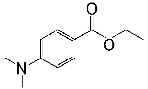 | 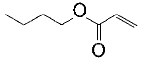 | >99 | >99 |
| Comparative example 4 | A-1 | 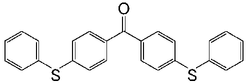 | - | | 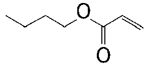 | 0 | 0 |
| Comparative example 5 | - | | B-1 | 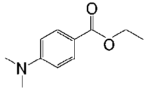 | 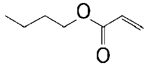 | 0 | 0 |
| Comparative example 6 | A-5 | 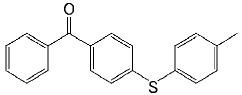 | B-1 | 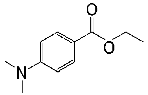 | 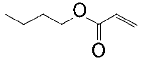 | 66 | >99 |
| Comparative example 7 | A-6 | 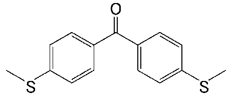 | B-1 | 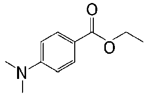 | 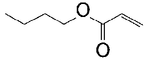 | 42 | 69 |

**[Table 2B]**

| No. | Polymerization initiator composition | | | | Monomer | Reaction conversion (%) | |
|---|---|---|---|---|---|---|---|
| | Component (A) | | Component (B) | | | 5 min | 10 min |
| Comparative example 8 | A-7 | 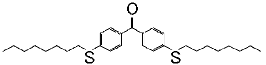 | B-1 | 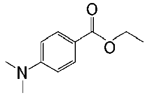 | 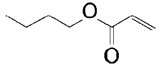 | 61 | >99 |
| Comparative example 9 | A-8 | 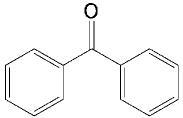 | B-1 | 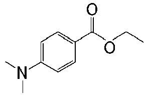 | 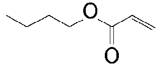 | 63 | 74 |

**[Table 3A]**

| No. | Polymerization initiator composition | | | | Monomer | Reaction conversion (%) | |
|---|---|---|---|---|---|---|---|
| | Component (A) | | Component (B) | | | 5 min | 10 min |
| Working example 5 | A-1 | 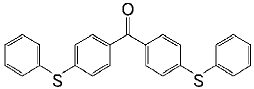 | B-1 | 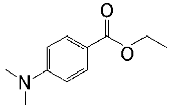 | 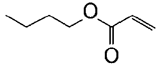 | 98 | >99 |
| Working example 9 | A-1 | 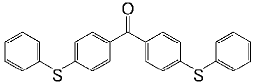 | B-2 | 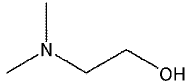 | 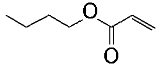 | 93 | >99 |
| Working example 10 | A-1 | 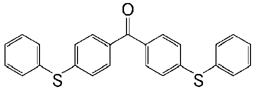 | B-3 | 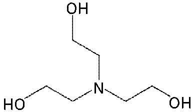 | 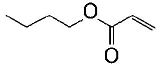 | 92 | >99 |
| Working example 11 | A-1 | 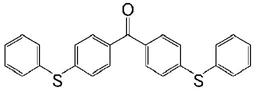 | B-4 | 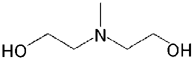 | 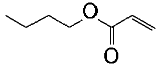 | 91 | >99 |
| Working example 12 | A-1 | 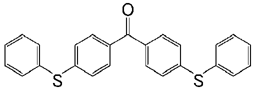 | B-5 | 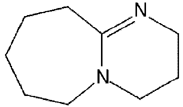 | 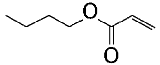 | 84 | >99 |
| Working example 13 | A-1 | 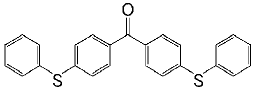 | B-6 | 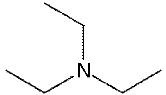 | 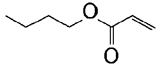 | 78 | >99 |
| Working example 14 | A-1 | 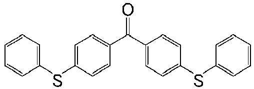 | B-7 | 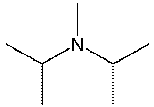 | 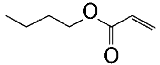 | 70 | >99 |
| Working example 15 | A-1 | 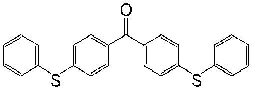 | B-8 | 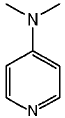 | 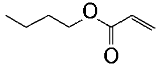 | 65 | >99 |
| Comparative example 10 | A-1 | 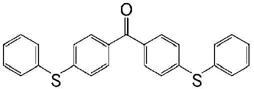 | B-9 | 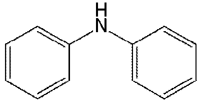 | 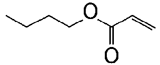 | 0 | 0 |

**[Table 3B]**

| No. | Polymerization initiator composition | | | | Monomer | Reaction conversion (%) | |
|---|---|---|---|---|---|---|---|
| | Component (A) | | Component (B) | | | 5 min | 10 min |
| Working example 32 | A-1 | 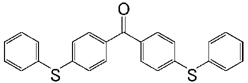 | B-10 | 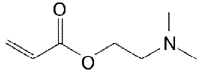 | 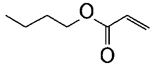 | 98 | >99 |
| Working example 33 | A-1 | 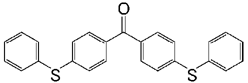 | B-11 | Polyethyleneimine average molecular weight: 600 | 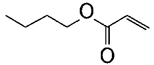 | 94 | >99 |
| Working example 34 | A-1 | 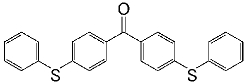 | B-12 | Polyethyleneimine average molecular weight: 1800 | 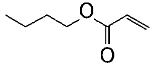 | 95 | >99 |
| Working example 35 | A-1 | 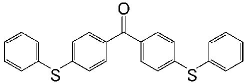 | B-13 | Polyethyleneimine average molecular weight: 10000 | 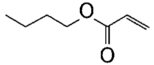 | 94 | >99 |
| Working example 36 | A-1 | 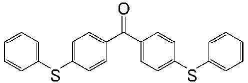 | B-14 | 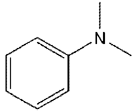 | 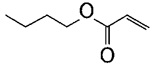 | 90 | >99 |
| Working example 37 | A-1 | 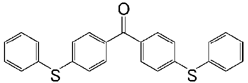 | B-15 | 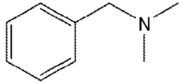 | 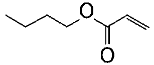 | 89 | >99 |
| Working example 38 | A-1 | 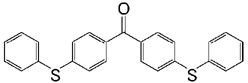 | B-16 | 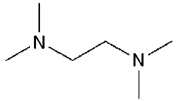 | 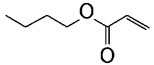 | 89 | >99 |
| Working example 39 | A-1 | 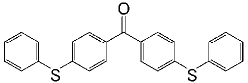 | B-17 | 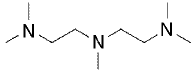 | 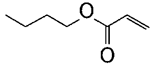 | 85 | >99 |
| Working example 40 | A-1 | 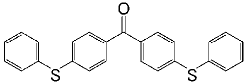 | B-18 | 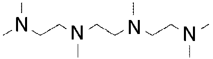 | 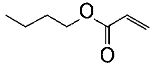 | 87 | >99 |

**[Table 3C]**

| No. | Polymerization initiator composition | | | | Monomer | Reaction conversion (%) | |
|---|---|---|---|---|---|---|---|
| | Component (A) | | Component (B) | | | 5 min | 10 min |
| Working example 41 | A-1 | 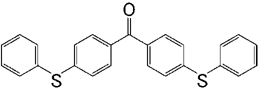 | B-19 | 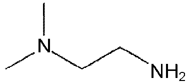 | 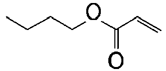 | 48 | >99 |
| Working example 42 | A-1 | 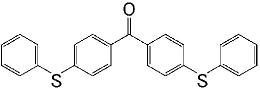 | B-20 | 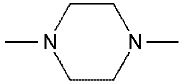 | 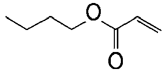 | 23 | >99 |

Table 4 shows the results of evaluating the effect of the compounding amounts (by mass percentage) of the polymerization initiator composition in the reaction solution on the reaction conversion. The reaction solution contained 3 g (100% by mass) of butyl acrylate as a monomer and the components (A) and (B) in the compounding amounts shown in Table 4. These results confirm that, when each of the components (A) and (B) in the polymerization initiator composition according to the present invention was used in an amount of 0.1% by mass (component (A): 0.04 mol%, component (B): 0.07 mol%, relative to the monomer) or more relative to the mass of the reaction solution, the reaction conversion after 5 minutes was 40% or more. It was also confirmed that, when each of the components (A) and (B) was used in an amount of 0.25% by mass (component (A): 0.1 mol%, component (B): 0.17 mol%, relative to the monomer) or more, the reaction conversion after 5 minutes was 80% or more. It was further confirmed that, when each of the components (A) and (B) according to the present invention was used in an amount of 0.5% by mass (component (A): 0.2 mol%, component (B): 0.35 mol%, relative to the monomer) or more, the reaction conversion after 5 minutes was 95% or more, and the photopolymerization reaction proceeded efficiently.

In addition, it was confirmed that, even when the components (A) and (B) were not equal in mass as in the working examples 43 and 44, the photopolymerization reaction proceeded efficiently.

This suggests that the polymerization initiator composition according to the present invention containing the components (A) and (B) is useful for polymerization reactions of various monomers.

**[Table 4]**

| No. | Polymerization initiator composition | | | | Compounding amounts of polymerization initiator composition in reaction solution (% by mass) | | Monomer | Reaction conversion (%) | | |
|---|---|---|---|---|---|---|---|---|---|---|
| | Component (A) | | Component (B) | | Component (A) | Component (B) | | 1 min | 5 min | 10 min |
| Working example 16 | A-1 | 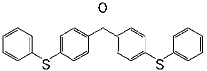 | B-1 | 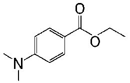 | 1 | 1 | 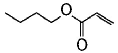 | - | 98 | >99 |
| Working example 17 | A-1 | 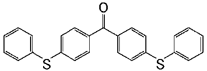 | B-1 | 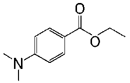 | 0.5 | 0.5 | 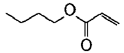 | - | 98 | >99 |
| Working example 18 | A-1 | 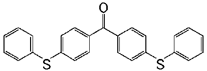 | B-1 | 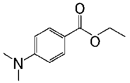 | 0.25 | 0.25 | 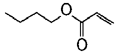 | - | 89 | >99 |
| Working example 19 | A-1 | 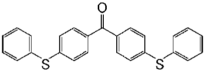 | B-1 | 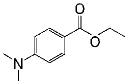 | 0.1 | 0.1 | 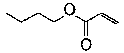 | - | 46 | 51 |
| Working example 43 | A-1 | 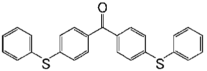 | B-1 | 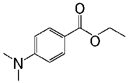 | 0.25 | 0.5 | 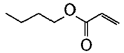 | 23 | 51 | >99 |
| Working example 44 | A-1 | 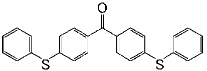 | B-1 | 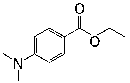 | 0.1 | 0.9 | 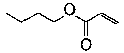 | 35 | 50 | 70 |

### 5. Solubility of Component (A) in Monomers and Solvents

The components (A), A-1 to A-4 and A-9 to A-12, (0.1 g) was added to butyl acrylate (1.0 g) or toluene (1.0 g), and the resulting mixture was stirred. The appearance of the mixture was visually observed, and the solubility was evaluated as follows (Table 5).

### Solubility Evaluation

⊚: dissolved transparently
∘: dissolved almost transparently, but turbidity was observed
△: not dissolved

As shown in the working examples 20 to 23 and 45 to 48 in Table 5, it was confirmed that the component (A) readily dissolved in butyl acrylate or toluene when it was any of A-2 to A-4 and A-9 to A-12. This suggests that, when the component (A) contained in the polymerization initiator composition according to the present invention has an aromatic hydrocarbon group bonded to a saturated aliphatic hydrocarbon group, it readily dissolves in monomers and solvents and is useful for photopolymerization reactions.

Among the working examples, benzophenone derivatives having two sulfide groups each bonded to an aromatic hydrocarbon group having a saturated aliphatic hydrocarbon group as a substituent, such as A-2 to A-4 and A-9 to A-12, exhibited good solubility in toluene. In particular, A-3, A-4, and A-9 to A-12 exhibited good solubility in butyl acrylate and toluene and are useful.

**[Table 5]**

| No. | Component A (benzophenone derivative) | | Solubility | |
|---|---|---|---|---|
| | | | Butyl acrylate | Toluene |
| Working example 20 | A-1 | 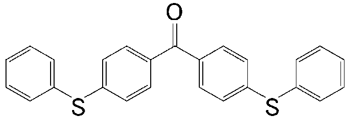 | Δ | Δ |
| Working example 21 | A-2 | 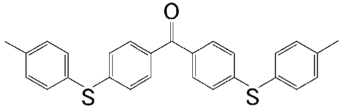 | Δ | ○ |
| Working example 22 | A-3 | 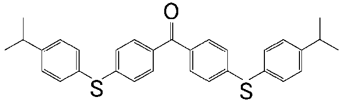 | ⊚ | ⊚ |
| Working example 23 | A-4 | 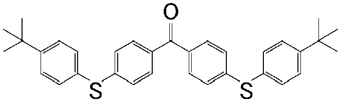 | ○ | ⊚ |
| Working example 45 | A-9 | 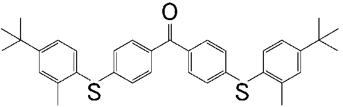 | ⊚ | ⊚ |
| Working example 46 | A-10 | 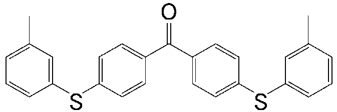 | ○ | ⊚ |
| Working example 47 | A-11 | 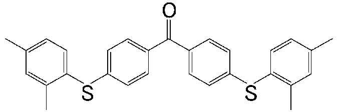 | ○ | ○ |
| Working example 48 | A-12 | 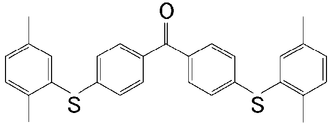 | ○ | ⊚ |

### 6. Reactivity of Polymerization Initiator Composition (2)

As shown in Table 6, A-3 (0.15 g) as the component (A) (benzophenone derivative) and B-1 (0.15 g) as the component (B) (amine compound) were dissolved in 3.0 g of various monomers to prepare reaction solutions. These reaction solutions were irradiated with light at 365 nm using an LED light source to perform a polymerization reaction. The viscous solids obtained after 5 minutes of light irradiation (accumulated light dose: 500 mJ/cm²) and 10 minutes of light irradiation (accumulated light dose: 1000 mJ/cm²) were dissolved in a 0.05 % by mass deuterated chloroform solution of dibutylhydroxytoluene (BHT) to stop the polymerization reaction, and the resulting solutions were used as samples for NMR measurement. Using NMR (BRUKER: ULTRASHILDE 400PLUS), the reaction conversions were determined from the decrease ratios of the peaks derived from the olefins of the various monomers, with reference to the peaks of the monomers before the reaction as being 100.

As shown in the working examples 8 and 49 to 52 in Table 6, the reaction conversion after 5 minutes of light irradiation exceeded 99% in the (meth)acrylate monomers and the acrylamide monomers, and high reactivity was confirmed.

This suggests that the polymerization initiator composition according to the present invention is useful for polymerization reactions of various monomers.

**[Table 6]**

| No. | Polymerization initiator composition | | | | Monomer | | Reaction conversion (%) | |
|---|---|---|---|---|---|---|---|---|
| | Component (A) | | Component (B) | | | | 5 min | 10 min |
| Working example 8 | A-3 | 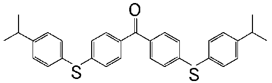 | B-1 | 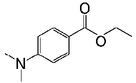 | M-1 | 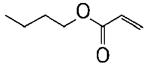 | >99 | >99 |
| Working example 49 | A-3 | 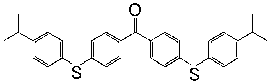 | B-1 | 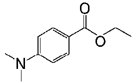 | M-2 | 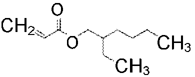 | >99 | >99 |
| Working example 50 | A-3 | 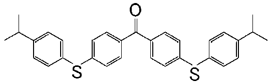 | B-1 | 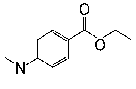 | M-3 | 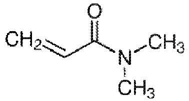 | >99 | >99 |
| Working example 51 | A-3 | 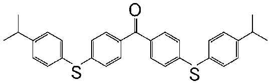 | B-1 | 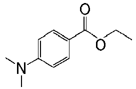 | M-4 | 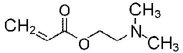 | >99 | >99 |
| Working example 52 | A-3 | 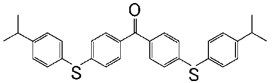 | B-1 | 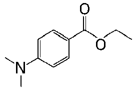 | M-5 | 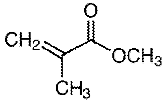 | >99 | >99 |

### 7. Sensitizer Test

The component (A) (0.3 g) and the component (C) (0.03 g) shown in Tables 7A, 7B, and 7C were dissolved in butyl acrylate (3.0 g) to prepare reaction solutions. These reaction solutions were irradiated with light at 365 nm using an LED light source to perform a polymerization reaction. The viscous solids obtained after 1 minute of light irradiation (accumulated light dose: 100 mJ/cm²), 2 minutes of light irradiation (accumulated light dose: 200 mJ/cm²), and 3 minutes of light irradiation (accumulated light dose: 300 mJ/cm²) were dissolved in a 0.05 % by mass deuterated chloroform solution of dibutylhydroxytoluene (BHT) to stop the polymerization reaction, and the resulting solutions were used as samples for NMR measurement. Using NMR (BRUKER: ULTRASHILDE 400PLUS), the reaction conversion was determined from the decrease ratio of the peak derived from the olefin of butyl acrylate, with reference the peak of butyl acrylate before the reaction as being 100.

As shown in the working examples 53 to 58 in Tables 7A, 7B, and 7C, it was confirmed that, even when the component (A) was used as a photosensitizer and combined with the component (C) as a polymerization initiator to form a polymerization initiator composition, the polymerization reaction of butyl acrylate proceeded more favorably than in the comparative examples.

This suggests that the photosensitizer according to the present invention is useful for polymerization reactions of various monomers when combined with a polymerization initiator to form a polymerization initiator composition.

**[Table 7A]**

| No. | Polymerization initiator composition | | | | Monomer | | Compounding ratio of components in reaction solution (% by mass) | | | Reaction conversion (%) | | |
|---|---|---|---|---|---|---|---|---|---|---|---|---|
| | Component (A) | | Component (C) | | | | Component (A) | Component (C) | Monomer | 1 min | 2 min | 3 min |
| Working example 53 | A-3 | 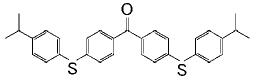 | C-1 | 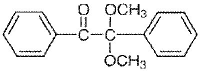 | M-1 | 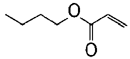 | 0.1 | 1 | 99 | 52 | 67 | 82 |
| Comparative example 11 | - | - | | | | | - | 1 | 99 | 54 | 70 | 72 |
| Comparative example 12 | A-13 | 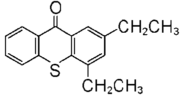 | | | | | 0.1 | 1 | 99 | 10 | 18 | 20 |
| Working example 54 | A-3 | 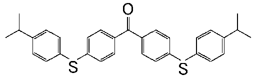 | C-2 | 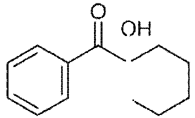 | M-1 | 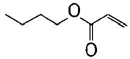 | 0.1 | 1 | 99 | 12 | 20 | 35 |
| Comparative example 13 | - | - | | | | | - | 1 | 99 | 11 | 12 | 13 |
| Comparative example 14 | A-5 | 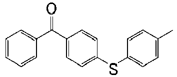 | | | | | 0.1 | 1 | 99 | 11 | 15 | 16 |
| Comparative example 15 | A-13 | 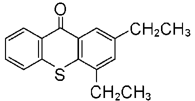 | | | | | 0.1 | 1 | 99 | 0 | 0 | 0 |

**[Table 7B]**

| No. | Polymerization initiator composition | | | | Monomer | | Compounding ratio of components in reaction solution (% by mass) | | | Reaction conversion (%) | | |
|---|---|---|---|---|---|---|---|---|---|---|---|---|
| | Component (A) | | Component (C) | | | | Component (A) | Component (C) | Monomer | 1 min | 2 min | 3 min |
| Working example 55 | A-3 | 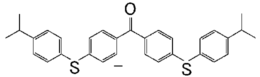 | C-3 | 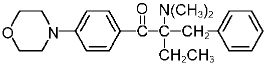 | M-1 | 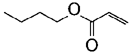 | 0.1 | 1 | 99 | 26 | 32 | 56 |
| Comparative example 16 | - | - | | | | | - | 1 | 99 | 29 | 37 | 48 |
| Comparative example 17 | A-5 | 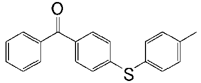 | | | | | 0.1 | 1 | 99 | 19 | 35 | 41 |
| Comparative example 18 | A-13 | 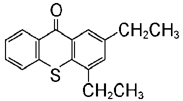 | | | | | 0.1 | 1 | 99 | 0 | 0 | 0 |
| Working example 56 | A-3 | 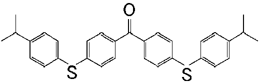 | C-4 | 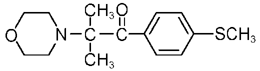 | M-1 | 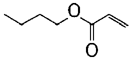 | 0.1 | 1 | 99 | 70 | 80 | >95 |
| Comparative example 19 | - | - | | | | | - | 1 | 99 | 20 | 28 | 30 |
| Comparative example 20 | A-5 | 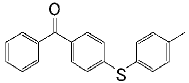 | | | | | 0.1 | 1 | 99 | 22 | 42 | 63 |
| Comparative example 21 | A-13 | 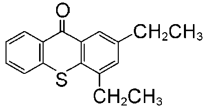 | | | | | 0.1 | 1 | 99 | 16 | 21 | 48 |

**[Table 7C]**

| No. | Polymerization initiator composition | | | | Monomer | | Compounding ratio of components in reaction solution (% by mass) | | | Reaction conversion (%) | | |
|---|---|---|---|---|---|---|---|---|---|---|---|---|
| | Component (A) | | Component (C) | | | | Component (A) | Component (C) | Monomer | 1 min | 2 min | 3 min |
| Working example 57 | A-3 | 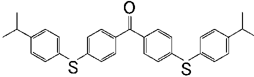 | C-5 | 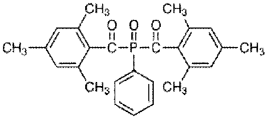 | M-1 | 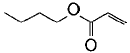 | 0.1 | 1 | 99 | 83 | >95 | >95 |
| Comparative example 22 | - | - | | | | | 0.1 | 1 | 99 | 77 | 77 | 93 |
| Comparative example 23 | A-5 | 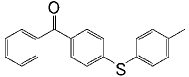 | | | | | 0.1 | 1 | 99 | 65 | 85 | 90 |
| Comparative example 24 | A-13 | 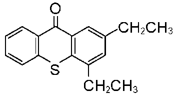 | | | | | 0.1 | 1 | 99 | 40 | 81 | 93 |
| Working example 58 | A-3 | 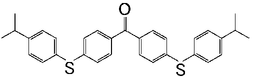 | C-6 | 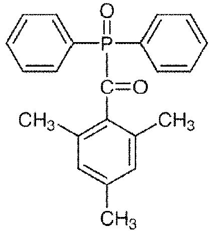 | M-1 | 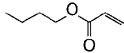 | 0.1 | 1 | 99 | >99 | >99 | >99 |
| Comparative example 25 | - | - | | | | | - | 1 | 99 | 55 | 63 | 78 |
| Comparative example 26 | A-5 | 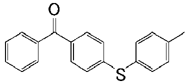 | | | | | 0.1 | 1 | 99 | 46 | 57 | 65 |
| Comparative example 27 | A-13 | 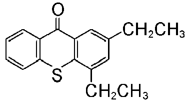 | | | | | 0.1 | 0.1 | 99 | 60 | 68 | 83 |

## Claims

1. A polymerization initiator or a photosensitizer comprising a component (A) of:
(A) a benzophenone derivative having two or more sulfide groups each bonded to an aromatic hydrocarbon group, said aromatic hydrocarbon group optionally having a substituent.

2. The polymerization initiator or the photosensitizer according to claim 1, wherein the component (A) is a benzophenone derivative represented by formula (1) defined as:
[Chemical formula 1]
R¹-S-Ph-(C=O)-Ph-S-R² (1)
wherein R¹ and R² each independently represent an aromatic hydrocarbon group optionally having a saturated aliphatic hydrocarbon group.

3. The polymerization initiator or the photosensitizer according to claim 2, wherein R¹ and R² each independently represent an aromatic hydrocarbon group having a saturated aliphatic hydrocarbon group having 1 to 18 carbon atoms.

4. The polymerization initiator or the photosensitizer according to claim 1, wherein the component (A) exhibits a molar absorption coefficient of 3000 L/(mol·cm) or more at 365 nm.

5. The polymerization initiator or the photosensitizer according to claim 1, wherein the component (A) exhibits a 5% weight loss temperature of 300°C or more.

6. A polymerization initiator composition comprising the components (A) and (B) of:
(A) a benzophenone derivative having two or more sulfide groups each bonded to an aromatic hydrocarbon group, said aromatic hydrocarbon group optionally having a substituent; and
(B) an amine compound having one or more hydrogen atoms bonded to a carbon atom adjacent to a nitrogen atom.

7. The polymerization initiator composition according to claim 6, wherein the component (B) is an amine compound comprising at least one selected from
an aminobenzoic acid compound;
an amine compound having an aliphatic hydrocarbon group and/or a hydroxyl group-containing saturated aliphatic hydrocarbon group, each bonded to a nitrogen atom;
an amine compound having an aliphatic hydrocarbon group and an aromatic group, each bonded to a nitrogen atom;
an amine compound having an aliphatic hydrocarbon group and an aliphatic hydrocarbon group having an unsaturated group-containing group, each bonded to a nitrogen atom;
an amine compound having two or more nitrogen atoms; and
a heterocyclic compound having a nitrogen atom.

8. The polymerization initiator composition according to claim 6, wherein the component (B) is an amine compound represented by formula (2) defined as:
[Chemical formula 2]
R³R⁴N-Ph-C(=O)-O-R⁵ (2)
wherein R³ and R⁴ each represent a saturated aliphatic hydrocarbon group, and R⁵ represents a hydrocarbon group.

9. A polymerization initiator composition comprising the components (A) and (C) of:
(A) a benzophenone derivative having two or more sulfide groups each bonded to an aromatic hydrocarbon group, said aromatic hydrocarbon group optionally having a substituent; and
(C) a polymerization initiator selected from
a radical polymerization initiator that undergoes intramolecular cleavage,
a cationic polymerization initiator, and
an anionic polymerization initiator.

10. A method for producing a resin, the method comprising:
adding the polymerization initiator or the photosensitizer according to any one of claims 1 to 5 to a resin material containing a monomer; and
polymerizing the monomer by photopolymerization through irradiation with light having a wavelength of 365 nm.
